# EUROPEAN PATENT SPECIFICATION

(11) **EP 2 556 018 B1**
(45) Date of publication and mention of the grant of the patent: **18.03.2015**
(21) Application number: 11718135.4
(22) Date of filing: 07.04.2011
(51) Int. Cl.: C01B 31/02

(54) **SEPARATION METHOD**
TRENNVERFAHREN
PROCÉDÉ DE SÉPARATION

(30) Priority: 09.04.2010 GB 201005991
(43) Date of publication of application: 13.02.2013
(73) Proprietor: UCL Business PLC, London W1T 4TP (GB)
(72) Inventor: HOWARD, Christopher, London WC1E 6BT (GB); SKIPPER, Neal, London WC1E 6BT (GB); SHAFFER, Milo, South Kensington London SW7 2AZ (GB); FOGDEN, Sian, Carlsbad CA 92008 (US)
(74) Representative: Jackson, Richard Eric
(86) International application number: PCT/GB2011/000539
(87) International publication number: WO 2011/124888

(56) References cited:
- WO-A1-2010/001128
- US-A1- 2003 168 385
- GU Z ET AL: "In situ Raman studies on lithiated single-wall carbon nanotubes in liquid ammonia", CHEMICAL PHYSICS LETTERS, NORTH-HOLLAND, AMSTERDAM, NL, vol. 410, no. 4-6, 20 July 2005 (2005-07-20), pages 467-470, XP004983932, ISSN: 0009-2614, DOI: DOI:10.1016/J.CPLETT.2005.05.010
- LIANG F ET AL: "A convenient route to functionalized carbon nanotubes", NANO LETTERS, ACS, WASHINGTON, DC, US, vol. 4, no. 7, 3 June 2004 (2004-06-03), pages 1257-1260, XP002360037, ISSN: 1530-6984, DOI: DOI:10.1021/NL049428C cited in the application
- BAUER B J ET AL: "Measurement of single-wall nanotube dispersion by size exclusion chromatography", JOURNAL OF PHYSICAL CHEMISTRY PART C: NANOMATERIALS AND INTERFACES, AMERICAN CHEMICAL SOCIETY, US, vol. 111, no. 48, 6 December 2007 (2007-12-06), pages 17914-17918, XP002549532, ISSN: 1932-7447, DOI: DOI:10.1021/JP071494Q [retrieved on 2007-06-21]

## Description

The present invention relates to optimised methods for dispersing nanotubes to create solutions comprising a high concentration of individual, charged nanotubes. The methods may include further separation steps wherein the dispersed nanotubes are separated by diameter, structure and electronic character, to produce sorted or fractionated material and solutions.

Nanoscaled carbon materials are of great technical and scientific interest. Carbon blacks have been known for a long time but have poorly defined structures. Recently, new classes of more perfect carbon nanostructures have been developed, including fullerenes and nanotubes. The most famous example of a fullerene is C₆₀, a pure carbon molecule with a specific symmetric and approximately spherical structure. The structure consists of edge-sharing hexagons and pentagons; exactly 12 pentagons are required to close the cage. Both larger and smaller fullerenes are known, by adding/removing (usually pairs of) carbon atoms. These larger fullerenes are usually also approximately spherical, due to a uniform distribution of the closure pentagons, but become increasingly polyhedral as they become larger due to localised strain at the pentagons.

Carbon nanotubes are related to fullerenes, but are structurally highly anisotropic. The closure pentagons are collected (6 at each end) to form 'caps' whilst the body of the tube is formed from a seamless cylinder of graphitic hexagons. There are no fundamental limits on aspect ratio, but around 1000 is typical, and 5,000,000 is known. The interesting properties of nanotubes are largely attributed to the hexagonal body, and indeed the end caps can be removed to form open tubes. Carbon nanotubes can be subdivided into two groups: single walled carbon nanotubes (SWNTs) and multiwalled carbon nanotubes (MWNTs).

SWNTs are pure carbon tubular molecules that can be thought of as a single 'rolled up' graphene sheet. SWNTs are typically around 1 nm in diameter, and their properties depend on their diameter and the angle at which they are rolled up from the graphene sheet (the chiral angle). Multiwalled carbon nanotubes consist of several concentric layers of SWNTS. There are several techniques for the production of carbon nanotubes. However, all result in a mixture of different diameters and chiralities.

The definitions of nanotubes can be extended to include a number of variants or derivatives familiar to those skilled in the art including, for example, the presence of defects (vacancies, other rings such as heptagons, and altered via hybridisation), endohedral material (filling of the hollow core with other substances), chemical functionalisation, di(or poly)merisation, and more complex topologies.

In general, synthesis techniques for nanotubes, and their derivatives, have poor selectivity, yielding a range of products with different specific characteristics. Dimensions and intrinsic symmetry determine many of the crucial properties, such as electronic structure, and optical behaviour. Therefore, it is highly desirable to separate these polydispersed materials into pure species. The conventional strategy with small fullerenes, such as C₆₀, is to dissolve the crude mixture into organic solvents (usually toluene) and extract the soluble fraction which can then be separated by conventional means, such as chromatography.

The particles are aggregated by means of strong van der Waals forces that cannot be overcome by the free energy available on dissolution/dispersion. Nanocarbons are particularly challenging due to the low polarity and lack of specific other interactions. Nanocarbon materials often also contain undesirable impurities, such as micron-scale graphite, amorphous carbon, and metal catalyst particles. In addition, single-wall nanotubes themselves tend to form tightly packed bundles of typically ∼50 tubes. These bundles contain tubes of similar, but not identical, diameter packed in a triagonal lattice. The bundles themselves are usually disordered, appearing like a plate of spaghetti. Arguably, the greatest challenge facing nanotube researchers at the moment is to sort out this mixture and form pure samples of specific types of SWNTS. The availability of pure (sorted or separated) nanotubes would significantly advance the field and permit the realisation of many of the suggested applications of nanotubes.

An ability to separate nanotubes into simply semi-conducting and metallic species is likely to immediately open up opportunities in many areas, including:
- ITO replacement: Indium tin oxide is widely used as a transparent conducting electrode for use in displays, and photovoltaics. SWNT thin films provide a neutral coloured alternative. If metallic SWNTs can be selected, the transmission / conductivity balance is likely to be superior to ITO.
- Electronic devices such as transistors, FETs, logic devices, sensors: The electronic properties and dimensions of semi-conducting single walled nanotubes suggest a route to drive forward Moore's Law in the semiconductor industry. Individual devices based on semi-conducting nanotubes have been demonstrated to be exceptionally fast and small, but are currently limited due to, for example, band-gap (radius) variability. Integrating large number of devices remains challenging, but appealing. Initial applications are developing in highly sensitive solid state sensors.
- Supercapacitors: The high surface area of metallic SWNTs (every atom is on the surface) combined with their conductivity provides excellent performance as electrochemical double layer supercapacitors (exceptional capacitances greater than 200F/g have been recorded already). Supercapacitors can radically improve the performance of portable batteries in electronics and transport applications.
- Vias / interconnects in microelectronic circuitry: Due to their one-dimensional electronic structure, (ballistic conduntance) and stability, metallic single walled carbon nanotubes can carry up to four orders of magnitude greater current density than conventional metals. They are thus candidates to replace traditional metallization as circuit dimensions continue to shrink.
- Heat sinks / thermal management: Individual metallic single walled carbon nanotubes have been shown to possess the highest known thermal conductance, better even than diamond.

The three vital processing steps that must be solved for the realisation of the potential of SWNTS are:
- to remove the catalyst particles and other carbon particles from the mix of products to leave pure SWNTS.
- to sort the nanotubes into their different types. More specifically, nanotubes need to be sorted either into specific chiralities and diameters or a broader separation of carbon nanotubes into either semi-conducting or metallic tubes.
- to align of nanotubes into ordered arrays of specific types of tube.

Current approaches towards all of these aims start with obtaining a solution of SWNTs. SWNTs are very stubbornly insoluble in nearly all solvents and this presents a real problem for their manipulation. It is necessary to isolate the individual tubes from each other by breaking up the bundles of nanotubes. This step is difficult because, as noted above, SWNTs form complicated stacked and entangled networks which are held together as a consequence of strong van der Waals forces. The simplest approach is to sonicate the SWNTs in organic solvent. This technique employs ultra-sonication to break apart the bundles, which is damaging to the nanotubes themselves. The resulting solutions are also of very low concentration (<10 micrograms/ml) if individual nanotubes rather than bundles are present, even after lengthy centrifugation (Coleman et al Adv. Mater 2008, 20, 1876-1881). Such concentrations are too low for practical purposes. Alternative techniques are therefore required.

The most commonly used method of SWNT dissolution is to surfactant wrap nanotubes as described in O'Connell et al., Science 297, 593 (2002). Again damaging sonication is used, and concentrations of stable suspensions are low (typically < 1mg/ml). Many related methods, use a range of direct covalent functionalisation chemistry to stabliise the nanotubes, following sonication. Although chemical modification is useful in certain circumstances, it is known to damage the intrinsic properties of nanotubes (Chen et al., Science 282. 95 (1998).

Essentially, all of these methods use damaging chemical functionalisation, sonication and/or strong oxidation (Tasis at al. Chem. Eur. J., 9(17), 4000, (2003)).

Another method is to use the extreme nature superacids to protonate the tubes to form positively-charged SWNTs which permits dissolution and a degree of ordering. This method is described in, for example, L. M. Ericson, et al, Science, 2004 and produces encouraging results. However, the acid is dangerous, difficult to handle, and likely damages the tubes.

The use of metal/liquid ammonia solutions to dissolve small fullerenes, such as C₆₀, is described in Howard CA et al, J. Am. Chem. Soc., 126, 13228, (2004). However, such a technique would not be expected to be useful for nanotubes as small fullerenes, which dissolve in organic solvents, do not form the extended and entangled networks formed by nanotubes.

Penicaud *et al.* describe the use of a charging mechanism to disperse nanotubes. The nanotubes are reduced with Na or Li and dissolved in a polar aprotic solvent, such as THF. Standard organic solvents are less favourable than ammonia/amines for this process as they do not solvate electrons or metal cations efficiently. As a result, Penicaud *et al.* must use a transfer agent, sodium napthalate, which contaminates the material. In addition, the solubility limit of the resulting anions is lower.

Others have used metal/ammonia systems for carrying out functionalisation chemistry on nanotubes as described in Liang et al., Nano Letters, 2004, 4 (7), 1257-1260. However, the goal of these studies is not dispersion or separation, but rather chemical modification. In fact, the conditions used in exisiting ammonia studies are poorly adapted for dispersion/separation purposes, as excess metal is used. Excessive metal washes out the possibility of selective charging, and prevents dispersion by screening the electrostatic repulsions between the carbon species, leading to so-called 'salting-out'.

As described above, once a solution has been generated, it is desirable to be able to separate out SWNTs having different properties, *e.g.* separate metallic SWNTs from semi-conducting SWNTs. While some progress has been made in this regard, current techniques, based on (di)electrophoresis, DNA wrapping, and relative reactivity are expensive, only partially successful, and operate at only <<1mg scale. Such techniques are described in Krupke R et al, Science, 300, 2018, (2003); Zheng M et al., Science, 302, 1545, (2003); Strano et al., Science, 301, 1519, (2003) and Howard et al, Nature Nanotechnology 1,60-65 (2006).

WO2010/001128 describes the use of electronic liquids which comprise a metal and an amine solvent for dispersing nanotubes. This document describes that dispersion of nanotubes is effective over a range of ratios of metal atoms in the electronic liquid to carbon atoms in the nanotubes with which the electronic liquid is contacted.

Against this background, it is clear that there is a need for an optimised and simple yet effective method for producing a solution comprising a high concentration of individual nanotubes, in particular SWNTs, from which it is possible to separate nanotubes having differing properties.

In this regard, the present invention provides a method for dispersing nanotubes without damage, thus providing a means to obtain purified, monodispersed, nanoscale carbon species.

More specifically, the present invention provides a method for dispersing carbon nanotubes, comprising contacting the nanotubes with an electronic liquid comprising a metal and an amine solvent, wherein the ratio of metal atoms in the electronic liquid to carbon atoms in the carbon nanotubes with which the electronic liquid is contacted is greater than 1:14 and less than 1:11.

Advantageously, the present inventors have surprisingly found that where the ratio of metal atoms in the electronic liquid to carbon atoms in the carbon nanotubes with which the electronic liquid is contacted is controlled carefully to be within this narrow range, the degree of spontaneous dissolution of the nanotubes to form individual nanotubes is optimised.

The term "spontaneous dissolution" is used herein to refer to the fact that the carbon nanotubes are dispersed into individual nanotubes without requiring any mechanical I agitation. This is an indication that the dispersed state is thermodynamically favourable.

By controlling the ratio to be within the range of greater than 1:14 and less than 1:11, a method is provided which is particularly effective at dispersing carbon nanotubes, thus providing a high yield of individual nanotubes. The yield is the mass fraction of the carbon nanotubes that can be dispersed spontaneously *i.e.* without mechanical agitation. Advantageously, the method of the present invention is particularly suitable for larger scale processes, wherein time and costs are reduced. The method provides an ideal starting material, in high concentration, for further manipulation, such as separation and functionalisation.

A further advantage of the method of the present invention is the cleanliness of the process. More specifically, only metal and amine solvent are added, and the solvents are highly volatile and easily removed, leaving the pure metal nanotubide salts. Many of the metals themselves are volatile and can be removed by sublimation. This means that the metal can thus be recovered for reuse, leaving clean, dispersed, individual nanotubes.

In the method of the present invention, the nanotubes are contacted with an electronic liquid. This step has the effect of charging the carbon species in question, to generate nanotube anions.

The term "electronic liquid" is used herein to describe the liquids which are formed when a metal, such as an alkaline earth metal or an alkali metal, for example, sodium, dissolves without chemical reaction into a polar solvent - the prototypical example being ammonia. This process releases electrons into the solvent forming a highly reducing solution. Without wishing to be bound by theory, these solutions dissolve nanotubes, based on two factors. First, the electron of the carbon species means that they form negatively charged anions. Second, these negatively charged anions are stably dispersed due to electrostatic repulsion.

One fundamental impediment to SWNT applications that has been overcome by the present invention is the need for dispersion into individual nanotubes rather than the usual bundles which form entangled networks. Electron charging in an amine, such as ammonia is a powerful approach because electrostatic repulsion separates the bundles. Advantageously, amines, such as ammonia, have the ability to solvate both the anions and cations, in contrast to protonation using superacids and reduction via sodium napthalide. The material may be separated into constituent species either by selective charging or selective discharging, fundamentally enabled by the different electronic structures of the different species.

The nanotubes used in the present invention may be SWNTs or MWNTs. The nanotubes are carbon nanotubes. The nanotubes may have a range of diameters. Typically, for SWNTs, the nanotubes will have diameters in the range from about 0.4 to about 3 nm. In one embodiment, where the nanotubes are SWNTs, the nanotubes will have diameters from about 0.5 to about 1.5 nm. Where the nanotubes are MWNTs, the diameters will preferably be in the range from about 1.4 to about 100 nm. Preferably, the carbon nanotubes are SWNTs. Suitable nanotubes can be obtained commercially from SWeNT, Carbon Nanotechnologies Inc., Carbolex Inc. and Thomas Swan Ltd.

The metal used in the method of the present invention is a metal which dissolves in an amine to form an electronic liquid. The person skilled in the art will be familiar with appropriate metals. Preferably, the metal is selected from the group consisting of alkali metals and alkaline earth metals. Preferably, the metal is an alkali metal, in particular, lithium, sodium or potassium. Preferably, the metal is sodium.

The key to the present invention is to control carefully the amount of metal included in the solution. Too much metal present in the electronic liquid washes out (saturates) the possibility of selective charging and prevents dispersion of the nanotubes by screening the electrostatic repulsions between the carbon species. Where not enough metal is present, the yield of individual nanotubes is low. The inventors have surprisingly identified a narrow range of ratios in which dispersion of the nanotubes is optimised. In this regard, the metal is present in an amount such that the ratio of metal atoms in the electronic liquid to carbon atoms in the carbon nanotubes with which the electronic liquid is contacted is in the range from 1:14 to 1:11, alternatively in the range from 1:13 to 1:12. The molar ratio (also referred to as the stoichiometric ratio) of metal to carbon atoms can be determined from their relative masses by simple calculations with which the person skilled in the art will be familiar.

In the method of the present invention, an electronic liquid is formed by dissolving the metal in an amine solvent. In some embodiments, the amine solvent may be a C₁ to C₁₂ amine, a C₁ to C₁₀ amine, a C₁ to C₈ amine, a C₁ to C₆ amine, a C₁ to C₄ amine. The amine solvent is preferably selected from ammonia, methylamine or ethylamine. Preferably, the amine solvent is ammonia.

In one embodiment, the amine solvent is included in the electronic liquid in an amount such that the concentration of the metal in the amine solvent is about 20 mol% or less, alternatively about 15 mol% or less, alternatively about 10 mol% or less, alternatively about 5 mol% or less, alternatively about 4 mol% or less, alternatively about 3 mol % or less, alternatively about 2 mol% or less, alternatively about 1 mol% or less. Preferably the amine solvent is included in the electronic liquid in an amount such that the concentration of the metal in the amine solvent is about 4 mol% or less, alternatively about 3 mol % or less, alternatively about 2 mol% or less, alternatively about 1 mol% or less.

In one embodiment, the metal is sodium and the amine solvent is ammonia.

The step of contacting the carbon nanotubes with the electronic liquid may produce directly a solution of individual nanotubes.

In an alternative embodiment of the present invention, the carbon nanotubes are contacted with the electronic liquid to produce a nanotubide salt, the electronic liquid is removed and the nanotubide salt is transferred to a solvent. In this embodiment, a solution of individual nanotubes is formed in the solvent. The solvent may be a dry organic solvent such as dimethyl formamide (DMF), dimethylacetamide (DMA) or N-methylpyrolidone (NMP). In this embodiment, preferably the solvent is DMF.

The product of the method of the present invention is a solution of dispersed individual nanotubes. As a consequence of the method of dispersion, the individual nanotubes will be charged. The person skilled in the art will be familiar with techniques which may be used to confirm the presence of individualised (debundled) nanotubes. An example of a suitable technique is small angle neutron scattering (SANS). Details of the SANS technique are described in Fagan et al., J Phys Chem B., (2006), 110, 23801.

SANS is a powerful technique for probing the structure of SWNTs in solution. More specifically, SANS can be used to determine whether the SWNTs are present as isolated species or in bundles or clusters. SANS provides information of the structure of large particles in solution (in the range from 1 to 1000 nm). The SANS intensity I(Q) is proportional to Q^{-D}, where D is the fractal dimension of the tube. Thus, the expected SANS pattern for fully dispersed rod-like objects (*i.e.* D ≈ 1) is Q⁻¹ behaviour. Otherwise, non-mono-dispersions of SWNTs, *i.e.* those consisting of aggregates or networks of rods exhibit a larger fractal dimensions, typically from 2 to 4.

It has been found that, where the method of the present invention is employed, it is possible to obtain high concentrations of nanotubes. In particular, the present inventors have achieved concentrations of greater than about 0.01mgml⁻¹. Preferably the concentration of individual nanotubes is about 0.1mgml⁻¹ or more, about 0.5 mgml⁻¹ or more, about 1 mgml⁻¹ or more, about 5 mgml⁻¹ or more, about 10 mgml⁻¹ or more, about 50 mgm⁻¹ or more, about 100 mgml⁻¹ or more.

A further advantage associated with the present invention is that selectivity is achieved. More specifically, the nature of the separation method is such that metallic carbon nanotubes are charged in preference to semi-conducting nanotubes. The effect is due to the variable electron affinity of SWNTs which depends on type, diameter, and helicity.

The types of nanotubes which are present in the solution can be determined by Raman scattering techniques (Desselhaus et al Physics Reports (2005), 40A). Raman scattering is a powerful technique for the determination of specific types of SWNT present in a sample consisting of mixed tubes. Raman scattering is the process of inelastic light scattering via an intermediate electron with energy lost or gained from a vibronic mode (phonon) of the sample. As only a very few photons are scattered in this way (1 in 10⁷), Raman spectroscopy therefore typically uses a laser for a high intensity beam of monochromatic light.

SWNTs are rolled up sheets of graphite and due to this tubular nature their electrons are confined in the radial direction of the tube. This quantisation leads to large spikes, called van Hove singularities, in their electronic Density of States (eDOS). If the incoming light matches the difference between these spikes, the Raman scattering is resonant. The Raman spectrum at any given wavelength is then dominated by the specific tubes which have transitions matching that wavelength in their eDOS. To predict which tubes will be in resonance with the light, a Kataura plot is often used. This graph is a plot of calculations of the transitions of different SWNTs as a function of their diameter.

Below 400cm⁻¹, the Raman spectra of SWNTs are dominated by the Radial Breathing Modes (RBM). The energy of this phonon is inversely proportional to the diameter of the SWNT. The Raman spectra of a sample of a mixture of tubes will show a sum of the peaks from all the RBMs from the SWNTs that are resonant with the light. Therefore, knowing the laser wavelength, one can read off from the Kataura plot which tubes are present in a given sample. If one takes a sample of SWNTs and processes it chemically, then by comparing its Raman spectrum with that of the untreated tubes, the relative population increase or decrease in the RBMs provides strong evidence of the relative increase or decrease of the specific type of SWNT in the sample. Furthermore, as can be seen in the plot, transitions from metallic and semi-conducting tubes are typically well separated for given energies. Thus, typically a spectrum contains reasonably clear regions of peaks corresponding to metallic and semiconducting SWNTs. In this way Raman Spectroscopy is a powerful technique in determining the extent of separation of SWNTs based on electronic character. Jorio A., New J. Phys., (2003), 5, 139 describes the use of this technique for characterising carbon nanotubes.

After producing a solution of dispersed individual nanotubes, one or more further steps may be carried out. In particular, the dispersion of individual nanotubes may be separated on the basis of diameter, structure, helicity and/or electronic character.

In one case, the dispersed material(s) may be separated by gradual quenching of the charge using a suitable quenching agent; including but not limited to O₂, H₂O, I₂, and alcohols (or other protic species). As the quenching agent is added, the species with the highest energy electrons will be deposited first. By adding appropriate stoichiometric quantities, the desired fractions may be separated. For example, the fractions precipitated after neutralising predetermined amounts of the total charge may be collected.

Alternatively or in addition to chemical quenching, an electrochemical quenching method may be used. In this case the addition charge on the individual nanotube-based anions is removed by applying a voltage to an (otherwise inert) electrode placed in the dispersion of nanotubes.

By controlling the potential of the electrode, nanotubes of different electron affinities can be oxidised and precipitated onto the electrode. The electrode (or series) of working electrodes may be held at fixed potential(s), in potentiostatic mode. A counter electrode may also be provided, preferably in a remote, though ionically-linked compartment, at which the metal ion is reduced and recovered. A reference electrode may be used to control the potential at the working electrode accurately.

Alternately, or in an additional step, the solvent may gradually be removed, causing the heaviest / least charged species to deposit first. These two mechanisms allow separation by, for example, nanotube length on the one hand, and nanotube electronic character (semiconducting band gap) on the other.

Optionally, quenching agents, including but not limited to RI, wherein R is a hydrocarbon group can be used to chemically modify the carbon species. By carrying out the reaction on dispersions of individual nanotubes, an ideally uniform functionalisation is achieved over the nanotube surface as typical functionalisations occur only on the surface of nanotube bundles.

Optionally, a solution of (previously separated) carbon species can be destabilised slowly (by quenching or solvent removal) to crystallise the carbon species.

Alternatively or in addition, the individualised, dispersed nanotubes, may be further separated according to size by chomatrography in a dry environment.

Optionally, the charged individual nanotubes can be transferred to other dry organic solvents, such as dimethyl formamide (DMF), dimethylacetamide (DMA) and N-methylpyrolidone (NMP), for further processing.

The primary products of this process are monodispersed, undamaged, nanocarbons or nanocarbon salts, which are not contaminated with organic or other material.

In one embodiment, the dispersed nanotubes may be quenched, preferably electrochemically to produce a nanotube crystal comprising a close packed array of nanotubes, wherein the crystal has a thickness of about 100 nm or more. In some embodiments, the crystal has a thickness of about 150 nm or more, about 200 nm or more, about 500 nm or more, about 750 nm or more, about 1 µm or more.

Where reference is made herein to the thickness of the crystal, it refers to the dimension of the crystal in a direction perpendicular to the axes of nanotubes of the close packed array of nanotubes from which it is formed.

The method of the present invention provides a product which is a very useful starting material for further manipulation of carbon nanotubes. Once separated, monodispered solutions of carbon species can be made that are particularly suitable for forming ordered complex fluids. For example a solution of dispersed individual carbon nanotubes can be produced at a concentration suitable for the formation of a nematic phase, which is desirable for alignment of nanotubes, or other further processing, including crystallisation.

The present invention will now be described further by reference to the following figures and examples which are in no way intended to limit the scope of the invention.
Figure 1 is a Raman spectrum measured at 633 nm which illustrates the radial breathing modes of the carbon nanotubes and shows an enrichment of metallic SWNTs in the spontaneously dissolved fraction, using CoMoCat tubes as a starting material;
Figure 2 is a UV/VIS spectrum which illustrates the depletion in semi-conducting peaks in the spontaneously dissolved fraction; using CoMoCat tubes as a starting material;
Figure 3 is a plot of SANS intensity as a function of scattered wavelength for a solution of spontaneously dissolved SWNTs in sodium ammonia solution at 230 K, using Carbolex As Produced (AP) SWNTs as a starting materal;
Figure 4 is a plot of the metal to carbon ratio as a function of the percentage of spontaneous dissolution using CoMoCAT nanotubes as the starting material;
Figure 5 illustrates spontaneous dissolution of a powder of ARC SWNTs following liquid ammonia reduction, into 10 cm³ dry DMF after a) 1 minute, b) 10 minutes, c) 30 minutes, d) 1 hour, and e) 12 hours;
Figure 6 is an SEM image of the spontaneously dissolved fraction; and
Figures 7(a) to 7(c) show AFM images of the CoMoCAT SWNT spontaneously dissolved fraction (Figures 7(a) and 7(b)), with height data (Figure 7(c)) showing the SWNT to be about 1 nm in height.

### Example 1

Single Walled Carbon Nanotubes (SWNTs) were obtained in 'as produced' grade obtained from Carbolex, Inc., USA and were heated at to a temperature in the range 180°C to 220°C and preferably around 200°C under a dynamic vacuum for 24 hours to remove adsorbed species. The nanotubes (20 mg) were then loaded in a specially designed clean cell, along with sodium metal in an Argon glovebox (O₂ and H₂O < 1ppm) such that there was a stoichiometric ratio of one sodium atom to every 30 carbon atoms. This was connected to a stainless steel, leak tight gas rig and cooled to approximately -50°C. Following this, high purity anhydrous ammonia (0.168 moles) was condensed onto the sample. Immediately, the solution forms a deep blue colour which can attributed to solvated electrons present due to the dissolution of sodium metal in the ammonia (Wasse *et al*.). After a period of about an hour, the solution clears (i.e. the blue colour of the solution disappears) which is indicative of the transfer of the solvated electrons to the SWNT structure (*i.e.* these electrons are 'picked up' by the nanotubes). The more readily reduced nanotubes then slowly dissolve and the solution becomes a brown/black colour. The dissolved fraction is then poured into a separate chamber in the cell and the ammonia is removed.

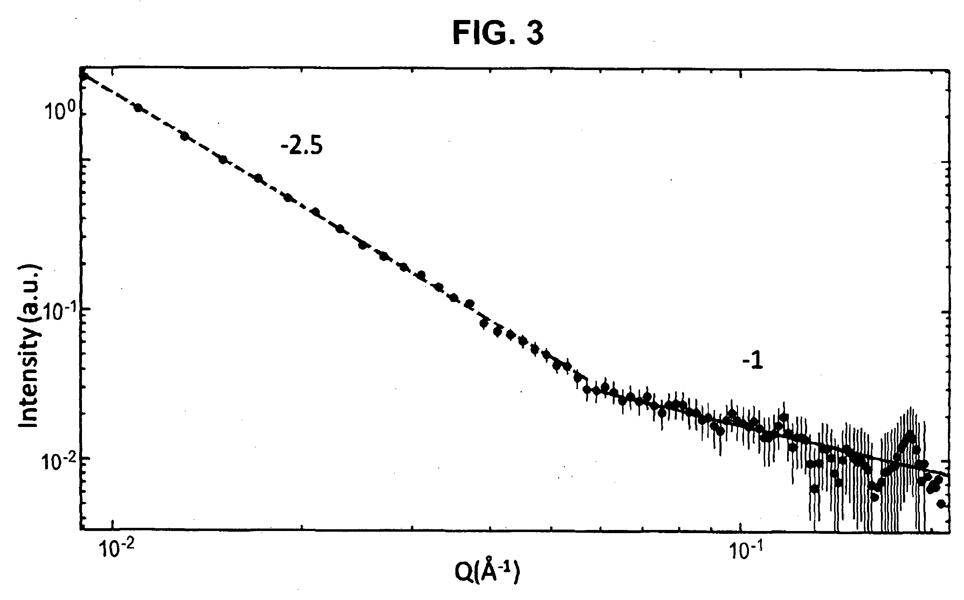

The solution of SWNTs was analysed by SANS and the results are illustrated in Figure 3.

Arc produced SWNTs typically contain shorter tubes which have small diameter range. Although this decrease in length means that the tubes will form stable solutions on a shorter time scale (longer tubes will take much longer to diffuse into solution), their particular diameter range means that determining any large change in the species of tubes present is difficult, especially determining the metal to semiconducting ratio. For this reason, CoMoCat SWNTs were used for the Raman/UVVis experiments.

CoMoCat tubes SWeNT Inc were processed as above. After the solution became colourless, i.e. after the electrons were transferred to the nanotubes, the ammonia was slowly removed. The nanotube salt was then transferred in rigorously dry conditions to another dry solvent, typically DMF. The tubes were left to dissolve over a period of several days until a homogenous brown/black solution was formed. The dissolved fraction was removed and the SWNTs precipitated out by quenching in air.

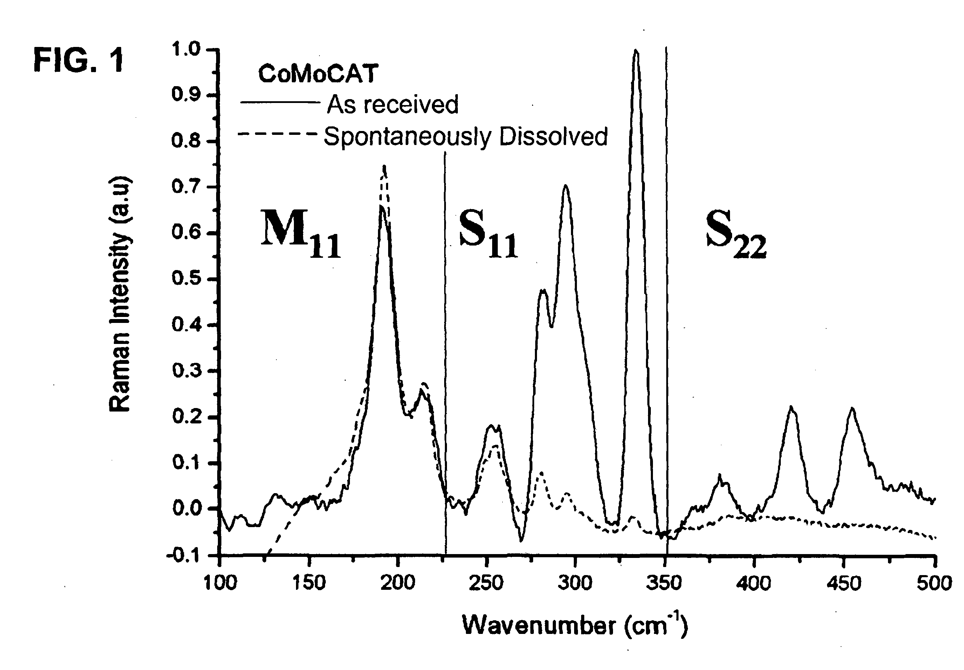

Figure 1 shows the radial breathing modes of the SWNTs and the distribution of the nanotubes can be established from these features in the Raman spectra of SWNTs. The presence of these features is strong evidence for the existence of SWNTs and the various RBM peaks represent populations of specific types of nanotubes. The position of the breathing mode is inversely related to the diameter of the SWNTs (Dresselhaus et al, Phys. Rep 409, 47, (2005)). As a comparison, Figure 1 shows Raman spectra from the as received starting material as well as the 'spontaneously dissolved' SWNTs - the SWNTs that were dispersed in solution and were subsequently removed. The areas in the spectra which correspond to metallic and semiconducting tubes are marked. The spectra show a clear enrichment of metallic SWNTs in the processed sample with respect to the as received sample. This result was repeated in the majority of areas of the processed sample.

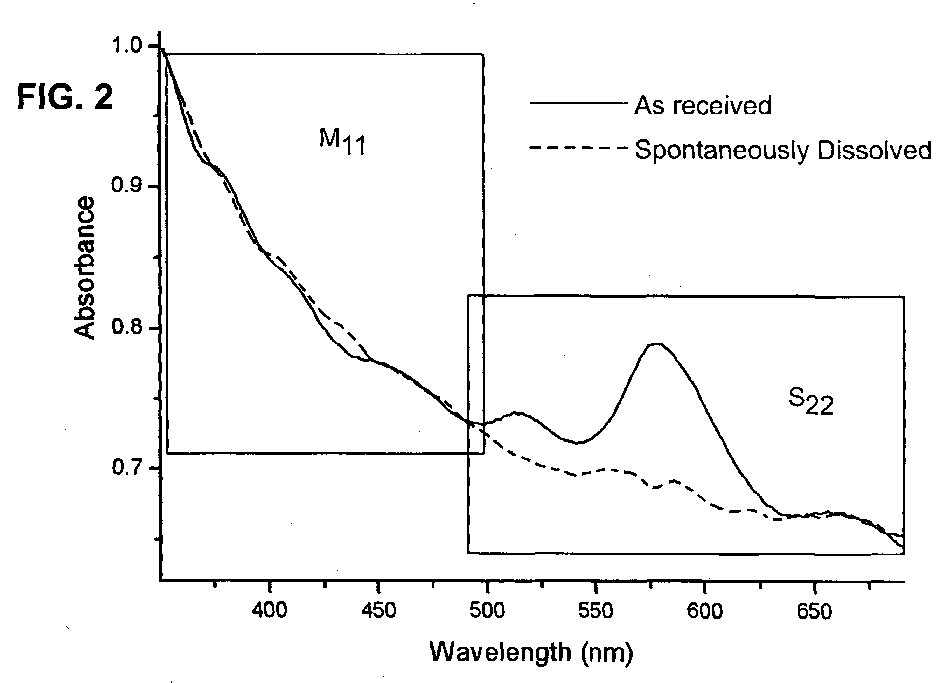

Furthermore, Figure 2 (UV/VIS spectroscopy) shows the depletion of semiconducting peaks in the spontaneously dissolved fraction and from these two figures it is apparent that the availability of the conductance band above the Fermi level accounts for the preferential reduction and dissolution of the metallic SWNTs.

There are two main factors in determining the selectivity of nanotubes via this method: 1) the electron affinity which depends on the electronic structure of the particular SWNT and 2) the enthalpy of solvation of the individual SWNT once the nanotubes are in solution. Each SWNT will have a specific value for electron affinity and will become reduced and dissolve in order. This process is somewhat analogous to the charging and hence dissolution of C₆₀ in metal-ammonia solution - there is a step-like reduction and hence a allowing the sequential dissolution. This result points towards the complete selectivity via incremental dissolution of different nanotubes.

Figure 3 shows SANS data from a solution of SWNTs (Arc-grown SWNTs from Carbolex, AP grade) dissolved in sodium ammonia solution as described above. The SANS experiment was performed on the instrument LOQ at ISIS spallation neutron source at the Rutherford Appleton Lab, UK. These data show two distinct scattering behaviours, one with a Q⁻¹ dependence, indicating isolated rods which persists down to Q= 0.2A⁻¹ which is a length scale of dimension down to 3nm - the limit of the instrument. This is approximately the size expected from a solvated SWNT. The Q^{-2.5} behaviour indicates that there is also larger dimensioned material in the solution.

As-produced arc tubes contain carbonaceous materials such as disordered carbon and graphite fragments and it is possible that they are also dissolving. The cross-over is thought to originate from the smallest size of the larger scatterer (i.e. the particles responsible for the Q^{-2.5} behaviour). Another explanation of the Q^{-2.5} behaviour is given in Lough et al., Nano Letters, 2006, 6(2), 313 on concentrated SWNT solutions. This paper shows that above a given concentration of SWNTs, due to the length of the tubes, even though they are dispersed, there is an unavoidable mesh formed due to contact between the solvated nanotubes. This is the cause of the higher power law scattering at lower Q for highly concentrated solutions of nanotubes. The paper goes on to show that the Q⁻¹ dependence is lost completely when the quality of the dispersion is reduced.

The SANS data provides strong evidence that solutions of SWNTs in electronic liquids are monodispersed from the clear presence of Q⁻¹ dependence of the scatterers. The Q^{-2.5} dependence also seen is thought to be either due to contacts between the isolated rods in the concentrated solution formed or larger dimensioned and sized carboneous materials which are also present in the raw tubes. The concentration of individual nanotubes present in the solution was about 1 mg/ml.

### Example 2

Example 1 was repeated using different ratios of metal atoms in the electronic liquid to carbon atoms in the carbon nanotubes with which the electronic liquid was contacted. More specifically, Single Walled Carbon Nanotubes (SWNTs) were obtained from Carbolex (ARC) and South Western Nanotechnologies (CoMoCAT) in 'as produced' grade and were heated at to a temperature in the range 180°C to 220°C and preferably around 200°C under a dynamic vacuum for 24 hours to remove adsorbed species. The nanotubes were then loaded in a specially designed clean cell, along with sodium metal in an Argon glovebox (O₂ and H₂O < 1ppm). The metal atom to carbon atom ratio was varied to be in the range from 1:2 to 1:20 using 20 mg of nanotubes in each experiment. Some additional experiments were performed with up to 100 mg nanotubes. In all cases, this cell was connected to a stainless steel, leak tight gas rig and cooled to approximately -50°C. Following this, high purity anhydrous ammonia (0.168 moles) was condensed onto the sample. Immediately, the solution formed a deep blue colour which can be attributed to solvated electrons present due to the dissolution of sodium metal in the ammonia (Wasse *et al*.). After a period of about an hour, the solution cleared (i.e. the blue colour of the solution disappears) which is indicative of the transfer of the solvated electrons to the SWNT structure *(i.e.* these electrons are 'picked up' by the nanotubes).

Over the time period for which the experiment was conducted, the ARC SWNTs, which are the more readily reduced nanotubes, slowly dissolved and the solution became a brown/black colour. The CoMoCAT SWNTs are less easily reduced and hence no dissolution was seen, although the CoMoCAT SWNTs were observed to swell in the liquid ammonia.

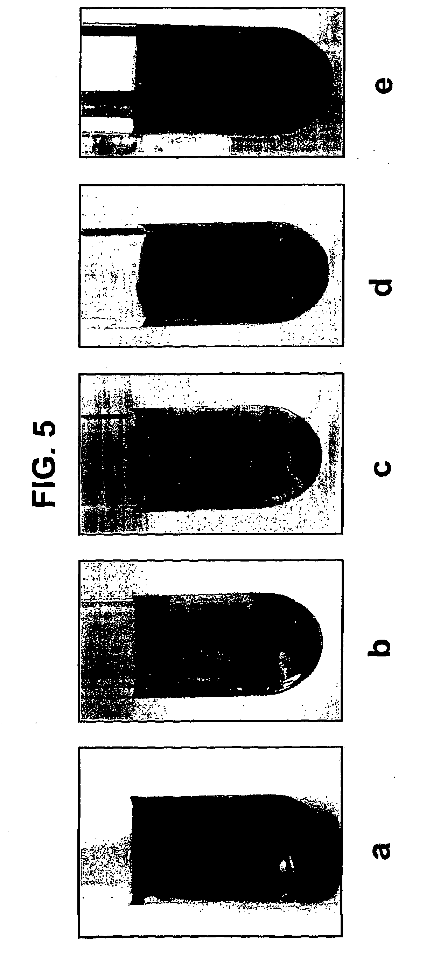

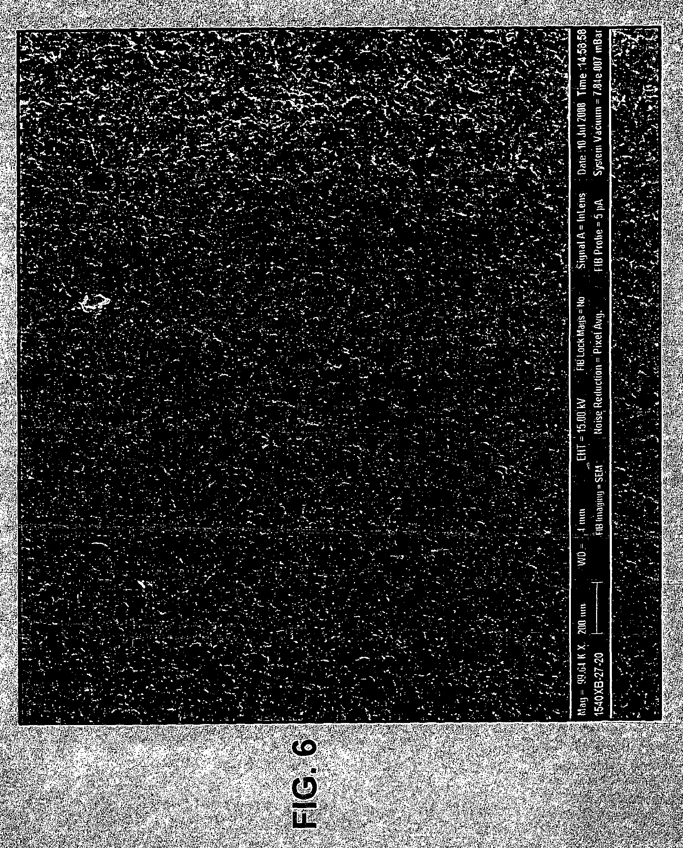

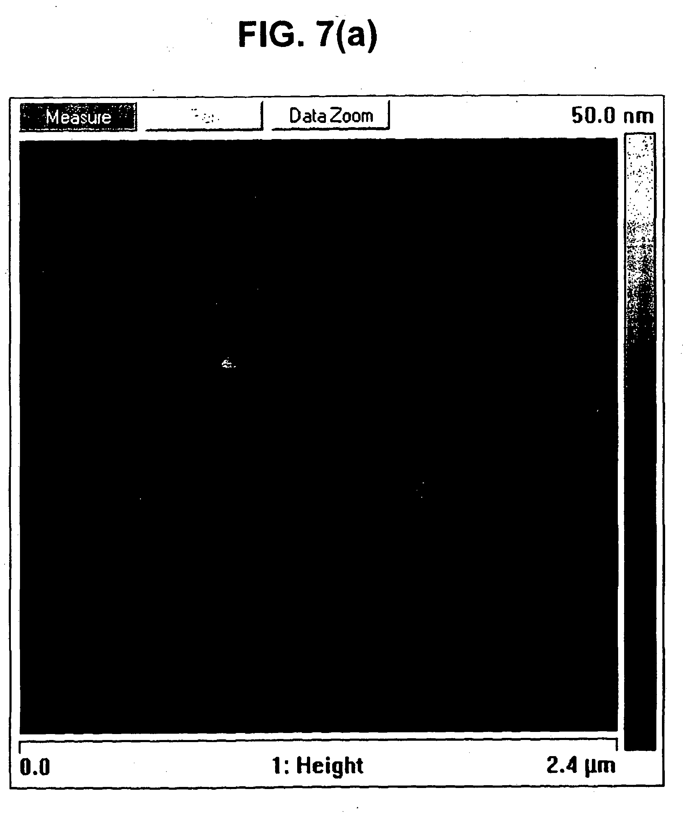

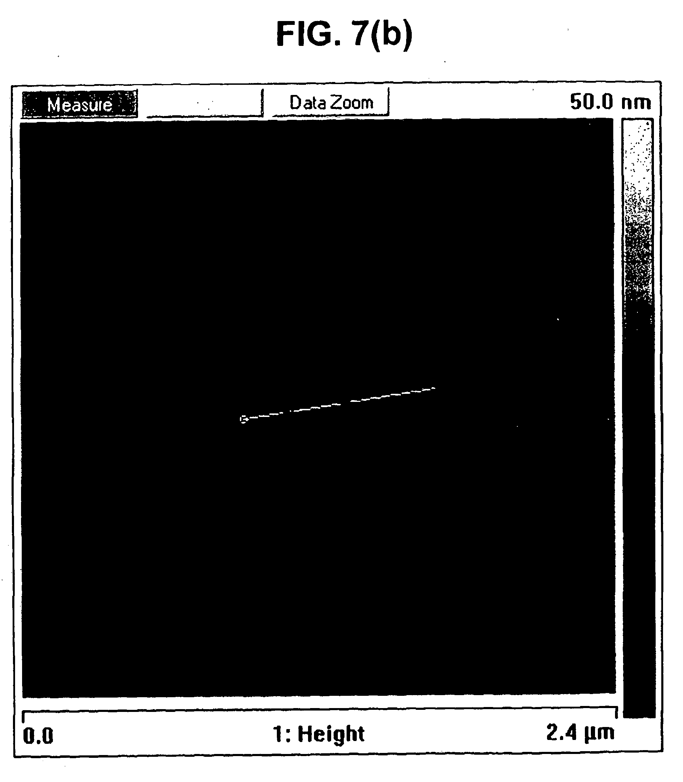

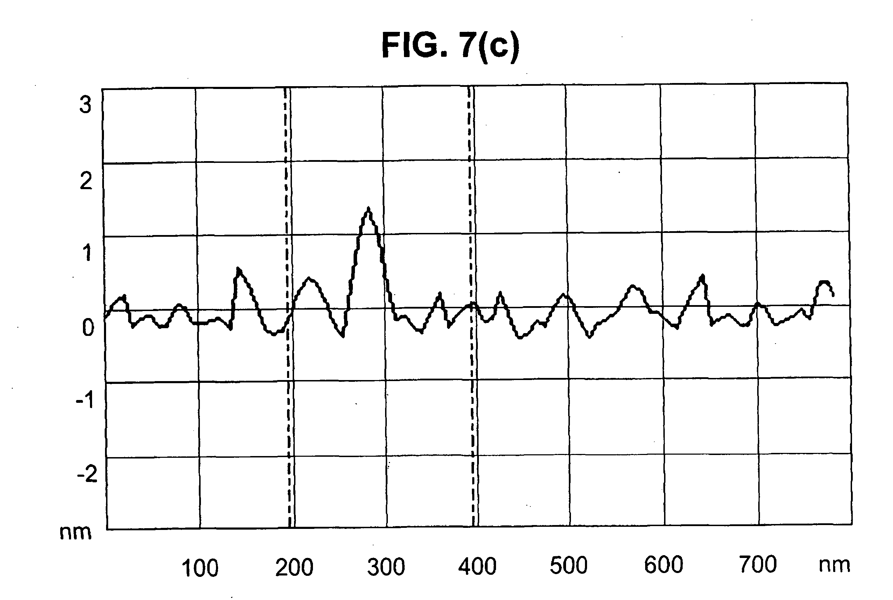

The liquid ammonia was then removed by cry-pumping and the nanotubide salt was transferred into a specially prepared air tight Schlenk tube in an Argon glovebox (O₂ and H₂O < 1ppm). Using standard organic chemistry techniques anhydrous DMF was added to the nanotubide salt and in both the ARC and CoMoCAT SWNT cases spontaneous dissolution in DMF was seen. The results are presented in Figure 5 to 7. Figure 5 shows that, following contact with an electronic liquid according to the present invention, dried ARC and CoMoCAT SWNT salts can be seen to spontaneously dissolve into DMF. With reference to Figures 6 and 7, the nanotubes present in the spontaneously dissolved fraction can be seen. The spontaneously dissolved fraction can be removed and the charge on it quenched. This spontaneously dissolved fraction is seen to contain primarily metallic SWNTs.

In each case, the concentration of individual nanotubes present in the solution was about 1 mg/ml.

The yield of the reaction (*i.e.* the percentage of spontaneous dissolution) is measured by decanting the spontaneously dissolved fraction and drying the undissolved fraction to remove the residual DMF and weighing.

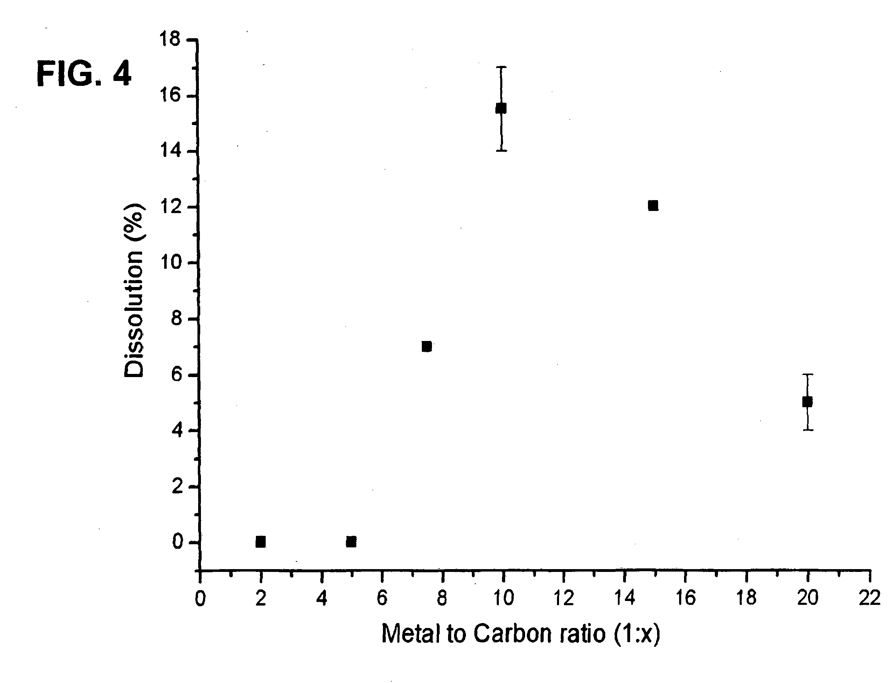

In Figure 4, it can be seen that the maximum yield of separation of the nanotubes into individual nanotubes is observed where the ratio of metal atoms in the electronic liquid to carbon atoms in the carbon nanotubes with which the electronic liquid is contacted is in the range from greater than about 1:15 to less than about 1:10. Experiments at a ratio of about 1:10 using different concentrations in ammonia (*i.e.* using 20, 50, 100 mg of nanotubes in a given experiment), resulted in the same yield within error, confirming that both the process is scaleable and that the observed improvement in yield is attributable to optimisation of the ratio of metal atoms in the electronic liquid to carbon atoms in the carbon nanotubes with which the electronic liquid is contacted. Thus, the inventors have surprisingly identified the range over which spontaneous dissolution is optimised.

## Claims

1. A method for dispersing carbon nanotubes, comprising contacting the nanotubes with an electronic liquid comprising a metal and an amine solvent, wherein the ratio of metal atoms in the electronic liquid to carbon atoms in the carbon nanotubes with which the electronic liquid is contacted is greater than 1:14 and less than 1:11.

2. A method according to claim 1, wherein a nanotubide salt is produced.

3. A method according to any preceding claim, wherein the metal is selected from the group consisting of alkali metals and alkaline earth metals, in one embodiment, an alkali metal.

4. A method according to any preceding claim, wherein the amine is ammonia.

5. A method according to any preceding claim, comprising a further step of separating the dispersed nanotubes.

6. A method according to claim 5, wherein the dispersed nanotubes are separated on the basis of electronic character, size, in one embodiment by chromatographic techniques, and/or helicity.

7. A method according to any preceding claim, which comprises a further step of removing the electronic liquid to provide purified or fractionated nanotubes.

8. A method according to any preceding claim, which comprises a further step of transferring the dispersed nanotubes to a solvent.

9. A method according to claim 2, comprising the further steps of removing the electronic liquid and transferring the nanotubide salt to a solvent.

10. A method according to claim 8 or claim 9, wherein the solvent is a dry organic solvent, in one embodiment wherein the solvent is dimethyl formamide or N-methylpyrolidone.

11. A method according to any preceding claim, wherein the nanotubes are single walled nanotubes.

## Patentansprüche

1. Verfahren zum Dispergieren von Kohlenstoffnanoröhren, bei dem man die Nanoröhren mit einer Elektronenflüssigkeit, die ein Metall und ein Amin-Lösungsmittel umfasst, in Berührung bringt, wobei das Verhältnis von Metallatomen in der Elektronenflüssigkeit zu Kohlenstoffatomen in den Kohlenstoffnanoröhren, mit denen die Elektronenflüssigkeit in Berührung gebracht wird, größer als 1:14 und kleiner als 1:11 ist.

2. Verfahren nach Anspruch 1, bei dem ein Nanotubidsalz hergestellt wird.

3. Verfahren nach einem der vorhergehenden Ansprüche, bei dem das Metall aus der Gruppe bestehend aus Alkalimetallen und Erdalkalimetallen ausgewählt ist und in einer Ausführungsform ein Alkalimetall ist.

4. Verfahren nach einem der vorhergehenden Ansprüche, bei dem es sich bei dem Amin um Ammoniak handelt.

5. Verfahren nach einem der vorhergehenden Ansprüche, bei dem man ferner die dispergierten Nanoröhren trennt.

6. Verfahren nach Anspruch 5, bei dem die dispergierten Nanoröhren auf der Basis von elektronischem Charakter, Größe, in einer Ausführungsform durch chromatographische Techniken, und/oder Helizität getrennt werden.

7. Verfahren nach einem der vorhergehenden Ansprüche, bei dem man ferner die Elektronenflüssigkeit entfernt, um gereinigte oder fraktionierte Nanoröhren bereitzustellen.

8. Verfahren nach einem der vorhergehenden Ansprüche, bei dem man ferner die dispergierten Nanoröhren in ein Lösungsmittel überführt.

9. Verfahren nach Anspruch 2, bei dem man ferner die Elektronenflüssigkeit entfernt und das Nanotubidsalz in ein Lösungsmittel überführt.

10. Verfahren nach Anspruch 8 oder Anspruch 9, bei dem es sich bei dem Lösungsmittel um ein trockenes organisches Lösungsmittel, in einer Ausführungsform Dimethylformamid oder N-Methylpyrrolidon, handelt.

11. Verfahren nach einem der vorhergehenden Ansprüche, bei dem es sich bei den Nanoröhren um einwandige Nanoröhren handelt.

## Revendications

1. Procédé de dispersion de nanotubes de carbone, comprenant la mise en contact des nanotubes avec un liquide électronique comprenant un métal et un solvant amine, le rapport des atomes métalliques dans le liquide électronique aux atomes de carbone dans les nanotubes de carbone avec lesquels le liquide électronique est mis en contact étant supérieur à 1:14 et inférieur à 1:11.

2. Procédé selon la revendication 1, dans lequel un sel de nanotubes anioniques est produit.

3. Procédé selon une quelconque revendication précédente, dans lequel le métal est choisi dans le groupe constitué par les métaux alcalins et les métaux alcalino-terreux, dans un mode de réalisation, un métal alcalin.

4. Procédé selon une quelconque revendication précédente, dans lequel l'amine est l'ammoniaque.

5. Procédé selon une quelconque revendication précédente, comprenant une étape supplémentaire de séparation des nanotubes dispersés.

6. Procédé selon la revendication 5, dans lequel les nanotubes dispersés sont séparés sur la base du caractère électronique, de la taille, dans un mode de réalisation par des techniques chromatographiques, et/ou de l'hélicité.

7. Procédé selon une quelconque revendication précédente, qui comprend une étape supplémentaire de retrait du liquide électronique pour fournir des nanotubes purifiés ou fractionnés.

8. Procédé selon une quelconque revendication précédente, qui comprend une étape supplémentaire de transfert des nanotubes dispersés à un solvant.

9. Procédé selon la revendication 2, comprenant les étapes supplémentaires de retrait du liquide électronique et transfert du sel de nanotubes anioniques à un solvant.

10. Procédé selon la revendication 8 ou la revendication 9, dans lequel le solvant est un solvant organique sec, dans un mode de réalisation dans lequel le solvant est le diméthylformamide ou la N-méthylpyrrolidone.

11. Procédé selon une quelconque revendication précédente, dans lequel les nanotubes sont des nanotubes monoparois.
